# EUROPÄISCHE PATENTSCHRIFT

(11) **EP 0 529 265 B1**
(45) Veröffentlichungstag und Bekanntmachung des Hinweises auf die Patenterteilung: **24.05.1995**
(21) Anmeldenummer: 92111803.0
(22) Anmeldetag: 10.07.1992
(51) Int. Cl.: B60R 22/46

(54) **Kupplung zum Übertragen der auf ein Zugseil wirkenden Rückstrafferbewegung auf eine Gurtbandspule eines Sicherheitsgurtautomaten**
Coupling for transferring the motion of a back tensioner acting on a cable to a webbing reel of an automatic safety belt
Couplage pour transférer le mouvement d'un tendeur de rappel agissant sur un câble à une bobine pour la bande d'une ceinture de sécurité automatique

(30) Priorität: 23.08.1991 DE 4127957
(43) Veröffentlichungstag der Anmeldung: 03.03.1993
(73) Patentinhaber: ICSRD RÜCKHALTESYSTEME FÜR FAHRZEUGTECHNIK GmbH, 82234 Wessling (DE)
(72) Erfinder: Specht, Martin, Ing. (FH), W-8133 Feldafing (DE)
(74) Vertreter: Nöth, Heinz, Dipl.-Phys.

(56) Entgegenhaltungen:
- EP-A- 0 313 098
- WO-A-87/00809
- FR-A- 2 615 150

## Beschreibung

Die Erfindung betrifft eine Kupplung zum Übertragen der auf ein Zugseil wirkenden Rückstrafferbewegung auf eine Gurtbandspule eines Sicherheitsgurtautomaten mit einer Kupplungsscheibe, die mit dem Zugseil verbunden ist, und mit der Gurtbandspule durch eine bei bewegtem Zugseil betätigten Mitnahmeeinrichtung drehfest für eine Umdrehung um eine gemeinsame Achse mit der Gurtbandspule verbindbar ist.

Beim normalen Fahrbetrieb liegt der Sicherheitsgurt locker am Körper des Fahrzeuginsassen an. Bei einem Unfall besteht daher die Gefahr, daß eine allzu starke Vorverlagerung des Fahrzeuginsassen trotz Blockierung der Gurtbandspule des Sicherheitsgurtautomaten erfolgt. Auch sind die Gurtbandlagen auf der Wickelwelle des Sicherheitsgurtautomaten relativ locker aufgewickelt und können zu einem sogenannten Filmspuleneffekt führen, der ebenfalls zu einer starken Vorverlagerung des Fahrzeuginsassen führen kann. Es ist bekannt, die Gurtlose am Körper des Fahrzeuginsassen und in dem locker aufgewickelten Gurtbandlagen durch eine Rückstrammervorrichtung im Crashfall zu beseitigen. Hierbei wird mittels eines Zugseiles, das am Sicherheitsgurt und/oder über eine Kupplungsscheibe an der Gurtbandspule angreift, die Gurtlose aus dem Sicherheitsgurt durch Straffen beseitigt. Solche Kupplungen mit den Merkmalen des Oberbegriffs des Anspruchs 1 sind beispielsweise aus der FR-A-2 615 150 und der EP-A-313 098 bekannt.

Aufgabe der Erfindung ist es, eine Kupplung zum Übertragen der auf ein Zugseil wirkenden Rückstrafferbewegung der eingangs genannten Art zu schaffen, durch die nach einem Crash innerhalb kurzer Zeit eine drehfeste Verbindung zwischen Kupplungsscheibe und somit zwischen Zugseil und der Gurtbandspule für eine rasche Beseitigung der Gurtlose aus den locker aufgewickelten Bandlagen und gegebenenfalls dem am Körper des Fahrzeuginsassen anliegenden Gurtband hergestellt wird.

Diese Aufgabe wird erfindungsgemäß dadurch gelöst, daß die Kupplungsscheibe eine spiralförmige Seilführung, entlang welcher das Zugseil geführt ist, aufweist und daß das Zugseil mit der Kupplungsscheibe bevorzugt im Bereich des größten Krümmungsradius des spiralförmigen Seilführungsteils verbunden ist.

Bei der Erfindung ist das Zugseil von der Verbindungsstelle mit der Kupplungsscheibe um die spiralförmige Seilführung, welche in geeigneter Weise eine Raumspirale für die Seilführung bildet, zu dem inneren Spiralteil hin mit dem kleinen Krümmungsradius gewickelt und von dort zur Rückstrammereinrichtung, welche die Strafferbewegung auf das Zugseil vermittelt, geführt.

Bei Beginn der auf das Zugseil wirkenden Strafferbewegung wirkt sich diese zunächst auf den kleinen Krümmungsradius der spiralförmigen Seilführung aus. Hierdurch wird gleich am Anfang der Strafferbewegung eine hohe Drehwinkelgeschwindigkeit der Kupplungsscheibe erreicht, weil das Zugseil auf den kleinen Krümmungsradius der spiralförmigen Seilführung wirkt. Hierdurch wird ein sofortiges Einkuppeln durch Betätigung der Mitnehmereinrichtung, die eine auf Massenträgheit, Fliehkraft oder Zwangsführung beruhenden Kupplungsmechanismus aufweisen kann, in die Gurtbandspule erreicht. Ferner wirkt sich die hohe Drehzahl zur raschen Beseitigung der Gurtlose auf die locker aufgewickelten Gurtbandlagen auf der Wickelwelle und gegebenenfalls auf die am Körper des Fahrzeuginsassen vorhandene Gurtlose aus. Bei fortlaufender Strafferbewegung erreicht man eine Hebelarmvergrößerung entlang der spiralförmigen Seilführung, mit der die Strafferbewegung über das Zugseil auf die angekuppelte Gurtbandspule wirkt. Die Kräfteverhältnisse am Gurtband werden damit dem zeitlichen Verlauf des Kraftaufbaus angeglichen. Der Punkt, an dem sich ein Kräftegleichgewicht (Kraftspeicher-Gurtkraft) einstellt, verschiebt sich gegenüber bekannten Vorrichtungen zu einer Erhöhung der Restkraft am Gurt und des Gurtbandeinzugs. Bevor es zu einer Vorverlagerung des Fahrzeuginsassen kommt, sind die auf der Gurtbandspule aufgewickelten Gurtbandlagen bereits gespannt und ein Filmspuleneffekt ist damit verhindert.

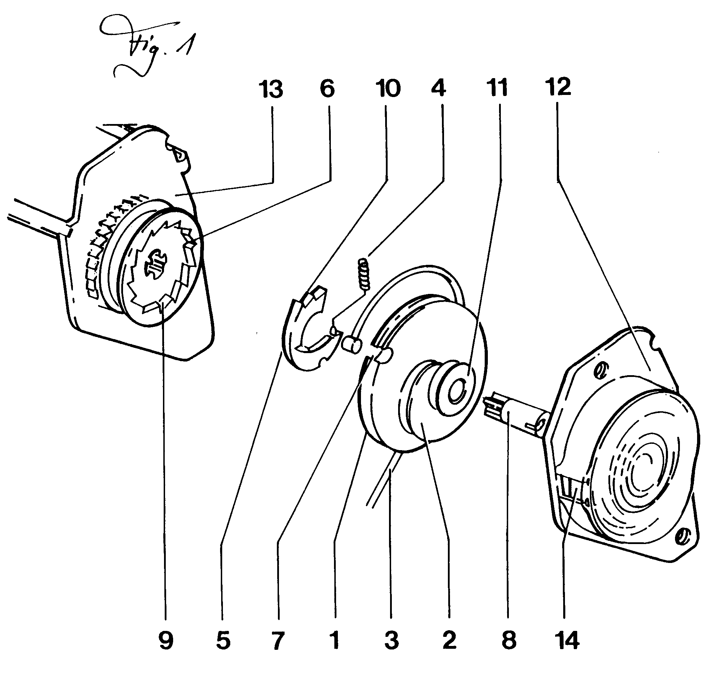

Anhand der beigefügten Figur wird an einem Ausführungsbeispiel die Erfindung noch näher erläutert.

Die Figur zeigt in perspektivischer auseinandergezogener Stellung die Einzelteile eines Ausführungsbeispiels der Kupplung.

Die in der Figur dargestellte Kupplung besitzt eine Kupplungsscheibe 1. Mit dieser Kupplungsscheibe 1 ist an einer Befestigungsstelle 7 ein Zugseil 3 verbunden. Im Normalbetrieb ist die Kupplungsscheibe 1 drehbar auf einem Achsstummel 8, der drehfest mit der nicht näher dargestellten Gurtbandspule verbunden ist, gelagert. Mit der Gurtbandspule ist ferner ein Eingriffteil 6 drehfest verbunden. Dieses Eingriffteil 6 besitzt eine Innenverzahnung 9 als Eingriffsmöglichkeit für eine noch zu beschreibende Mitnehmereinrichtung.

Zwischen dem Eingriffsteil 6 und der Kupplungsscheibe 1 befindet sich die Mitnehmereinrichtung. Diese besteht beim dargestellten Ausführungsbeispiel aus einer mit einer Trägheitsmasse behafteten Kupplungsklinke 5, die Eingriffszähne 10 aufweist. Durch eine Kupplungsfeder 4 wird die Kupplungsklinke 5 außer Eingriff mit dem Eingriffsteil 6 gedrückt, so daß bei Normalbetrieb die Gurtbandspule gegenüber der Kupplungsscheibe 1, welche beim Ausführungsbeispiel eine Kreisscheibenform hat, frei drehbar ist. Die Kupplungsklinke 5 ist schwenkbar an der Seite der Kupplungsscheibe 1 gelagert, welche der Gurtbandspule zugekehrt ist.

Auf der anderen Seite befindet sich an der Kupplungsscheibe 1 eine spiralförmige Seilführung 2 für das Zugseil 3. Die im Ausführungsbeispiel dargestellte Seilführung 2 verläuft auf einer Raumspirale. Der innen liegende Krümmungsradius der spiralförmigen Seilführung 2 mündet auf einem kreisförmigen Anfangsstück 11 der Seilführung. Der außen liegende Teil der spiralförmigen Seilführung mündet beim dargestellten Ausführungsbeispiel am kreisförmigen Umfang der Kupplungsscheibe und endet an der Befestigungsstelle 7 für das Zugseil 3.

Die im Ausführungsbeispiel gezeigte Seilführung 2 erstreckt sich entlang einer Raumspirale. Es ist auch möglich, die Seilführung in einer Ebene an der Kupplungsscheibe 1 mit Hilfe einer wandförmigen seitlichen Führung zu erreichen.

In bevorzugter Weise erstreckt sich die Seilführung 2 entlang einer archimedischen Spirale.

In der Figur ist ferner eine äußere Abdeckung 12, welche an einem Rahmenschenkel 13 des Sicherheitsgurtautomaten befestigt werden kann, dargestellt. Durch diese Abdeckung 12 wird der Kupplungsmechanismus nach außen hin abgedeckt. Die Abdeckung 12 besitzt eine Öffnung 14, durch die das Zugseil 13 zur nicht näher dargestellten Rückstrammereinrichtung, welche die Strafferbewegung erzeugt, geführt ist.

Wenn im Crashfall von der Rückstrammereinrichtung eine Strafferbewegung auf das Zugseil 3 ausgeübt wird, wirkt sich diese Strafferbewegung zuerst im Bereich der etwa kreisförmigen Führung am Anfangsstück 11, die in den inneren, d.h. kleinen Krümmungsradius der spiralförmigen Seilführung 2 übergeht, aus. Es wird eine Drehbewegung mit hoher Drehzahl auf die Kupplungsscheibe 1 übertragen. Aufgrund der hohen Drehzahl wirkt eine hohe Fliehkraft auf die Kupplungsklinke 5, die mit ihren Eingriffszähnen 10 mit der Innenzahlung 9 des Eingriffsteils 6 gegen die Kraft der Feder 4 in Eingriff kommt. Auf diese Weise ist die Kupplungsscheibe 1 und damit das auf der Seilführung 2 geführte Zugseil 3 drehfest mit der Gurtbandspule des Aufrollautomaten verbunden.

Für die Beseitigung der Gurtlose in den auf die Gurtbandspule aufgewickelten Gurtbandlagen wirkt sich noch die hohe Drehzahl der Kupplungsscheibe 1 aus, welche von dem Zugseilteil bewirkt wird, der auf der Seilführung 2 mit relativ kleinem Krümmungsradius geführt ist. Es erfolgt daher eine rasche Beseitigung dieser Gurtlose sowie der Gurtlose, mit welcher das Gurtband am Körper des Fahrzeuginsassen anliegt. Durch den Spiralanstieg vergrößert sich der Hebelarm, mit welchem die Strafferbewegung des Zugseiles 3 auf die Kupplungsscheibe 1 und damit auf die Gurtbandspule und den Sicherheitsgurt einwirkt.

Anstelle der in der Figur dargestellten Mitnehmereinrichtung (Kupplungsfeder 4, Kupplungsklinke 5 und Eingriffsteil 6) kann auch durch Zwangsführung der Kupplungsklinke 5 der Kupplungseingriff bewirkt werden. Die Zwangsführung kann an der Kupplungsscheibe 1 oder dem Eingriffsteil 6 vorgesehen sein, wobei die Relativdrehung zwischen diesen beiden Teilen für das Einkuppeln ausgenützt wird. Auch hier wirkt sich die am Anfang der Strafferbewegung hohe Drehwinkelgeschwindigkeit der Kupplungsscheibe 1 vorteilhaft aus.

## Patentansprüche

1. Kupplung zum Übertragen der auf ein Zugseil (3) wirkenden Rückstrafferbewegung auf eine Gurtbandspule eines Sicherheitsgurtautomaten mit einer Kupplungsscheibe (1), die mit dem Zugseil verbunden ist und mit der Gurtbandspule durch eine bei bewegtem Zugseil betätigten Mitnehmereinrichtung (4-6) drehfest für die Umdrehung um eine gemeinsame Achse mit der Gurtbandspule verbindbar ist, dadurch gekennzeichnet, daß die Kupplungsscheibe (1) eine spiralförmige Seilführung (2), entlang welcher das Zugseil (3) geführt ist, aufweist, und daß das Zugseil (3) mit der Kupplungsscheibe (1) im Bereich des Seilführungsteils (2) mit einem größeren Krümmungsradius als im innenliegenden Spiralenanfang (11) verbunden ist.

2. Kupplung nach Anspruch 1, dadurch gekennzeichnet, daß die Mitnehmereinrichtung (4-6) an der der Gurtbandspule zugewandten Seite der Kupplungsscheibe (1) und die spiralförmige Seilführung (2) an der anderen Seite der Kupplungsscheibe (1) angeordnet sind.

3. Kupplung nach Anspruch 1 oder 2, dadurch gekennzeichnet, daß unter Ausnützung der im kleineren Krümmungsradiusbereich der spriralförmigen Seilführung (2) vom bewegten Zugseil (3) auf die Kupplungsscheibe (1) übertragenen Drehbewegung die Mitnehmereinrichtung (4-6) betätigt ist.

4. Kupplung nach einem der Ansprüche 1 bis 3, dadurch gekennzeichnet, daß die Seilführung (2) die Form einer archimedischen Spirale hat.

5. Kupplung nach einem der Ansprüche 1 bis 4, dadurch gekennzeichnet, daß der Krümmungsradius der Seilführung (2) am Spiralanfang das 1:2,53-fache des Krümmungsradius an der Befestigungsstelle (7) des Zugseils (3) an der Kupplungsscheibe (1) beträgt.

## Claims

1. A coupling for transmitting the tightener movement acting on a tension cable (3) to a belt webbing reel of an automatic safety belt comprising a coupling plate (1) which is connected to the tension cable and which can be connected to the belt webbing reel non-rotatably for rotation about a common axis with the belt webbing reel by an entrainment means (4-6) which is actuated when the tension cable is moved characterised in that the coupling plate (1) has a spiral cable guide (2) along which the tension cable (3) is guided and that the tension cable (3) is connected to the coupling plate (1) in the region of the cable guide portion (2) with a larger radius of curvature than in the inwardly disposed beginning (11) of the spiral.

2. A coupling according to claim 1 characterised in that the entrainment means (4-6) is arranged at the side of the coupling plate (1), which is towards the belt webbing reel, and the spiral cable guide (2) is arranged at the other side of the coupling plate (1).

3. A coupling according to claim 1 or claim 2 characterised in that the entrainment means (4-6) is actuated by utilising the rotary movement which is transmitted in the region of the smaller radius of curvature of the spiral cable guide (2) from the moved tension cable (3) to the coupling plate (1).

4. A coupling according to one of claims 1 to 3 characterised in that the cable guide (2) is in the form of an Archimedean spiral.

5. A coupling according to one of claims 1 to 4 characterised in that the radius of curvature of the cable guide (2) at the beginning of the spiral is 1:2.53 times the radius of curvature at the fixing location (7) of the tension cable (3) on the coupling plate (1).

## Revendications

1. Accouplement pour la transmission du mouvement de remise sous tension, agissant sur un câble de traction (3), sur une bobine d'une sangle de ceinture d'un système automatique de ceinture de sécurité comprenant une poulie d'accouplement (1), qui est reliée au câble de traction et peut être reliée à la bobine de la sangle de ceinture, avec blocage en rotation pour la rotation autour d'un axe commun avec cette bobine, au moyen d'un dispositif d'entraînement (4-6) actionné lors du déplacement du câble de traction, caractérisé par le fait que la poulie d'accouplement (1) comporte un guide-câble de forme spiralée (2), le long duquel le câble de traction (3) est guidé, et que le câble de traction (3) est relié à la poulie d'accouplement (1) vers la zone de la partie formant guide-câble (2) possédant un rayon de courbure plus important qu'au niveau du début intérieur (11) de la spirale.

2. Accouplement suivant la revendication 1, caractérisé par le fait que le dispositif d'entraînement (4-6) est disposé sur le côté, tourné vers la bobine de la sangle de ceinture, de la poulie d'accouplement (1) et que le guide-câble de forme spiralée (2) est disposé sur l'autre côté de la poulie d'accouplement (1).

3. Accouplement suivant la revendication 1 ou 2, caractérisé par le fait que le dispositif d'entraînement (4-6) est actionné moyennant l'utilisation du mouvement de rotation transmis par le câble de traction déplacé (3) à la poulie d'accouplement (1), dans la gamme des petits rayons de courbure du guide-câble de forme spiralée (2).

4. Accouplement suivant l'une des revendications 1 à 3, caractérisé par le fait que le guide-câble (2) possède la forme d'une spirale d'Archimède.

5. Accouplement suivant l'une des revendications 1 à 4, caractérisé par le fait que le rayon de courbure du guide-câble (2) au début de la spirale, est égal à 1:2,53 fois le rayon de courbure au niveau du point (7) de fixation du câble de traction (3) à la poulie d'accouplement (1).
